# FASCICULE DE BREVET EUROPEEN

(11) **EP 3 445 594 B1**
(45) Date de publication et mention de la délivrance du brevet: **25.03.2020**
(21) Numéro de dépôt: 17725661.7
(22) Date de dépôt: 24.04.2017
(51) Int. Cl.: B60C 11/03, B60C 11/12, B60C 11/00

(54) **BANDE DE ROULEMENT DE PNEU COMPRENANT DES DÉCOUPURES DE DIFFÉRENTES PROFONDEURS**
REIFENLAUFFLÄCHE MIT AUSSPARUNGEN UNTERSCHIEDLICHER TIEFE
TYRE TREAD COMPRISING CUTOUTS OF DIFFERENT DEPTHS

(30) Priorité: 22.04.2016 FR 1653592
(43) Date de publication de la demande: 27.02.2019
(73) Titulaire: Compagnie Générale des Etablissements Michelin, 63000 Clermont-Ferrand (FR)
(72) Inventeur: HARLE, François, 63040 Clermont Ferrand Cedex 9 (FR); NUGIER, Franck, 63040 Clermont Ferrand Cedex 9 (FR); SPINNLER, Olivier, 63040 Clermont Ferrand Cedex 9 (FR)
(74) Mandataire: Millanvois, Patrick Jacques Jean
(86) Numéro de dépôt international: PCT/FR2017/050966
(87) Numéro de publication internationale: WO 2017/182762

(56) Documents cités:
- EP-A1- 1 361 075
- EP-A1- 3 156 261
- WO-A1-2010/133940
- DE-A1-102008 015 978
- JP-A- 2013 144 526
- JP-U- S63 130 302

## Description

### DOMAINE DE L'INVENTION

La présente invention concerne les pneus pour engins de travaux de génie civil et notamment les dessins de sculpture dont sont pourvues les bandes de roulement de ces pneus.

### ÉTAT DE LA TECHNIQUE

Pour assurer une adhérence satisfaisante en motricité et en freinage, il est nécessaire de former sur une bande de roulement d'un pneu une sculpture, cette sculpture comprenant un ensemble de découpures et de cavités plus ou moins complexes. Ces découpures et cavités forment un dessin de sculpture à la fois sur la surface dite surface de roulement destinée à venir en contact avec le sol et dans l'épaisseur de la bande.

Il est connu notamment par le document de brevet FR 1452048 de former dans une bande de roulement des découpures larges (dites « rainures ») et des découpures étroites (dites « incisions » ou « rainures étroites »). Une incision ou une rainure étroite a une largeur appropriée pour que les parois en vis-à-vis la délimitant puissent venir au moins partiellement en contact l'une contre l'autre lors du passage dans la zone de contact du pneu avec la chaussée. Ainsi, il est possible de bénéficier de la présence d'arêtes formées à l'intersection des découpures avec une surface de roulement tout en conservant des rigidités suffisantes à la bande dès lors que les parois en vis-à-vis sont en contact l'une contre l'autre au moins en partie. Dans le cas d'une rainure, les parois de cette rainure ne peuvent venir en contact l'une contre l'autre dans les conditions normales de roulage.

Les bandes de roulement pour les pneus destinés aux véhicules de génie civil ont en général des épaisseurs importantes de matière à user, c'est-à-dire au moins égales à 60 mm ce qui les différencie nettement des bandes de roulement des autres pneus et notamment des pneus pour véhicules poids lourd. De plus, la nature des sols sur lesquels ces pneus roulent génère des sollicitations spécifiques qui peuvent être particulièrement agressives notamment par la présence de cailloux et autres objets. Dans les conditions d'utilisation préconisées, ces fortes épaisseurs peuvent générer des élévations de température résultant des déformations cycliques provoquées par le roulage. Pour obtenir de bonnes performances avec le temps il est nécessaire de réduire cette température de fonctionnement, au moins lorsque la bande de roulement est neuve, en augmentant la ventilation des régions de la bande de roulement qui sont le plus susceptibles de subir de fortes élévations de températures.

Pour certains usages, il est habituel de placer des pneus neufs en position avant sur un véhicule puis, dès lors que l'usure a atteint une limite fixée au préalable, de monter ces mêmes pneus usés sur un essieu arrière. Ainsi des pneus identiques peuvent être employés sur les essieux d'un même véhicule.

Il est cité comme documents de l'état de la technique les documents suivants : FR 2989031 A1, EP 2394824 B1 ; ces documents peuvent servir à la compréhension du problème posé et résolu par la présente invention.

Le document JP2013-144526-A divulgue une bande de roulement où les rainures étroites ne sont pas telles que définies dans la partie caractérisante de la revendication 1.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu. Une direction est dite oblique dès lors qu'il existe entre cette direction et la direction axiale un angle différent de zéro et au plus égal à 60 degrés.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Un bloc est un élément en relief formé sur la bande de roulement qui est délimité par des creux ou rainures et comprenant des parois latérales et une face de contact destinée à venir en contact avec la chaussée.

Dans le présent document, une découpure est un terme générique désignant soit une rainure soit une incision, cette dernière étant également appelée rainure étroite. Une découpure est délimitée par des parois de matière se faisant face et distantes l'une de l'autre d'une distance (dite « largeur de la découpure »).

Ce qui différencie une rainure étroite ou incision d'une rainure large c'est précisément cette distance ; dans le cas d'une rainure étroite ou incision, cette distance est appropriée pour permettre la mise en contact au moins partielle des parois délimitant la rainure étroite ou incision au moins lors du passage dans le contact avec la chaussée. Dans le cas d'une rainure large, les parois de cette rainure ne peuvent venir en contact l'une contre l'autre dans les conditions normales de roulage.

Une bande de roulement a une épaisseur maximale de matière à user en roulage ; une fois cette épaisseur maximale atteinte le pneu peut être remplacé par un pneu neuf ou bien rechapé, c'est-à-dire pourvu d'une nouvelle bande de roulement. Le volume de matière à user correspond pour les pneus de l'invention à la quantité de matière située entre la surface de roulement à l'état neuf et une surface virtuelle parallèle à la surface de roulement à l'état neuf et passant par les points les plus à l'intérieur des découpures formées dans la bande de roulement.

Par axialement vers l'extérieur, on entend une direction qui est orientée vers l'extérieur de la cavité interne du pneu.

Un taux de creux volumique pour une bande de roulement ou une partie d'une bande de roulement correspond au rapport entre le volume total de creux dans cette bande de roulement ou dans cette partie et le volume total de la bande de roulement ou de la partie incluant le volume total de creux.

Un taux de creux surfacique pour une bande de roulement ou une partie d'une bande de roulement correspond au rapport entre la surface totale des creux pour cette bande de roulement ou cette partie de bande de roulement et la surface totale de la bande de roulement ou de la partie de bande incluant la surface des creux.

### BREF EXPOSÉ DE L'INVENTION

La présente invention vise à améliorer les performances d'adhérence des bandes de roulement ayant de fortes épaisseurs quel que soit leur niveau d'usure tout en limitant l'augmentation de la température de fonctionnement dans les régions du pneu les plus chaudes.

À cet effet, l'invention a pour objet une bande de roulement pour pneu destiné à l'équipement d'un véhicule hors la route selon la revendication 1.

Préférentiellement, le pas moyen des rainures des bords est déterminé afin de disposer au moins une rainure étroite de chaque profondeur P1, P2, P11, P22 dans la région de contact du pneu avec le sol dans les conditions d'utilisation préconisées.

Avantageusement, la rainure étroite de la partie centrale comprend des premières parties d'une première longueur S1 et des deuxièmes parties d'une deuxième longueur S2, cette deuxième longueur S2 étant plus grande que la première longueur S1. Ainsi il est possible de privilégier à neuf un taux de creux plus important que celui qui est recherché après une usure partielle voyant disparaitre les parties de rainure étroite les moins profondes.

Avantageusement, chaque région de bord est séparée de la région intermédiaire qui lui est directement contiguë par une rainure étroite d'orientation générale circonférentielle. Par rainure d'orientation générale circonférentielle, il faut comprendre une rainure faisant le tour du pneu peu importe qu'elle soit zigzagante ou non.

À cette dernière variante, il peut être intéressant de former en outre une rainure étroite d'orientation générale circonférentielle entre chaque région intermédiaire et la région centrale.

Préférentiellement, sur chaque région intermédiaire les rainures étroites font un angle moyen au plus égal à 45 degrés avec la direction axiale.

De façon avantageuse, il est préférable que d'une part, l'écart entre les profondeurs à neuf des premières parties et des deuxièmes parties de rainure étroite de la région centrale et, d'autre part, l'écart entre les profondeurs à neuf respectivement des rainures étroites d'une première profondeur P11 et des rainures étroites d'une deuxième profondeur P12 d'une région intermédiaire soient au moins égales à 15% et au plus égales à 70% de la profondeur P des rainures formées sur les régions de bord de la bande de roulement.

Ainsi dans une première période d'usage de pneus selon l'invention (entre l'état neuf et une usure partielle au plus égale à 50% de l'épaisseur à user), la bande de roulement comprend un grand nombre d'arêtes formées par l'ensemble des rainures ce qui est à la fois bénéfique pour obtenir une bonne performance en adhérence et une bonne ventilation thermique de la bande, la fermeture des rainures étroites dans le contact empêchant les objets présents sur le sol de venir agresser le fond des rainures. Dans une seconde période d'usage, ce même pneu est positionné sur un essieu arrière pour lequel le besoin n'est plus le même qu'en position avant : la réduction du nombre d'arêtes est alors bénéfique sur le plan de l'endurance et de la résistance aux agressions lors du roulage.

Avantageusement, il peut être combiné à cette présence de découpures de différentes profondeurs la présence de matériaux appropriés. Notamment, il est intéressant de former la bande de roulement par superposition d'un premier matériau et d'un deuxième matériau de manière à ce que dans un premier temps ce soit le premier matériau qui soit en contact avec le sol et qu'ensuite ce soit le deuxième matériau qui vienne en contact avec le sol. Dans cette variante préférentielle, les parties de rainures étroites de moindre profondeur P2, P22 sont prévues pour disparaitre au plus tard lorsque le premier matériau est totalement usé. Dans cette variante, le premier matériau peut être choisi pour être un matériau ayant de bonnes performances en usure tandis que le deuxième matériau peut être choisi pour avoir une meilleure résistance aux agressions.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue partielle de la surface d'une bande de roulement selon une première variante de l'invention ;
La figure 2 représente une vue en coupe selon un plan perpendiculaire au plan de la figure 1 et dont la trace est montrée avec la ligne II-II ;
La figure 3 montre une vue partielle de la surface d'une bande de roulement selon la première variante de l'invention après une usure partielle ;
La figure 4 montre une vue d'une deuxième variante d'une bande de roulement selon l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

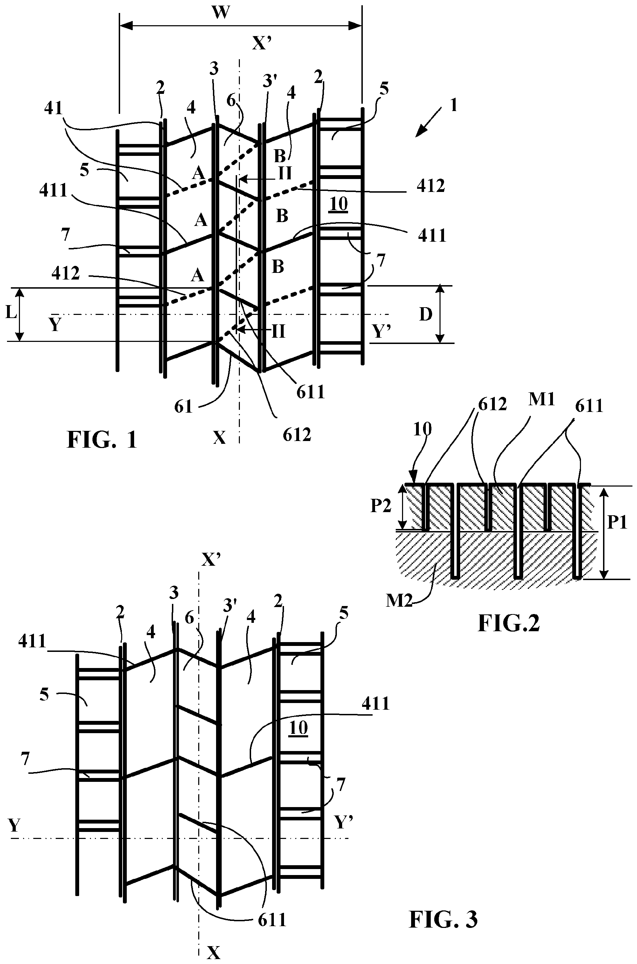

La figure 1 représente une vue partielle de la surface de roulement 10 à neuf d'une bande de roulement 1 selon une première variante de l'invention. À neuf, cette bande de roulement, destinée à équiper un pneu de diamètre 57 pouces, a une épaisseur de matière à user égale à 100 mm et une largeur totale W égale à 982 mm.

Selon cette variante d'une bande de roulement d'un pneu destiné à équiper dans un premier temps l'essieu avant d'un véhicule pour usage hors la route, on distingue des régions de bord 5 délimitant axialement la bande de roulement, chaque région de bord 5 ayant une largeur 220 mm est bordée par une rainure circonférentielle étroite 2. Sur ces régions de bord 5, il est formé une pluralité de rainures larges 7 de largeur 50 mm et de profondeur P égale à 100 mm. Ces rainures larges 7 des régions de bord 5 sont orientées transversalement et disposées dans la direction circonférentielle selon un pas moyen D égal à 255 mm. Ces rainures larges 7, disposées avec un même pas moyen sur chaque bord 5, sont décalées circonférentiellement d'un bord par rapport à l'autre.

.On définit une région centrale 6 centrée sur le plan médian équatorial et délimitée dans la présente variante par des rainures étroites circonférentielles 3 et 3'. Cette région centrale 6 a une largeur égale à l'amplitude du zigzag d'une rainure étroite 61 occupant toute la largeur de cette région centrale. Dans l'exemple décrit cette amplitude est égale à 96 mm. Les rainures étroites ont une largeur appropriée pour que leurs parois en vis-à-vis viennent en contact l'une contre l'autre lors du passage dans le contact avec le sol.

Cette rainure étroite 61 en zigzag est composée d'une alternance de premières parties de rainure étroite 611 et de deuxièmes parties de rainure étroite 612, ces premières et ces deuxièmes parties de rainure étroite étant connectées entre elles par des régions de jonction indiquées par les lettres A, B (les régions de connexion A étant toutes d'un même côté du plan médian équatorial matérialisé par la ligne XX' sur la figure 1, les régions de jonction B étant toutes de l'autre côté dudit plan).

La distance circonférentielle L entre deux régions de jonction d'un même coté du plan médian équatorial à l'intérieur desquelles se trouvent une première partie de rainure 611 et une deuxième partie de rainure 612 est égale au pas moyen D des rainures transversales 7 des régions de bord 5.

Entre chaque région de bord 5 et la région centrale 6, il est formé une région intermédiaire 4 de largeur sensiblement égale à la largeur des parties de bord 5. Ces parties intermédiaires comprennent une pluralité de rainures étroites obliques 41, c'est à dire dont l'orientation moyenne fait un angle ici égal à 30 degrés avec la direction axiale YY', chacune de ces rainures étroites prenant naissance en une région de jonction A ou B de la rainure étroite de la partie centrale pour rejoindre une rainure transversale ou oblique formée sur l'un des bords.

En outre, la rainure étroite 61 de la partie centrale est constituée de premières parties 611 de rainure étroite ayant une profondeur P1 égale à 80 mm et de deuxièmes parties 612 de rainure étroite ayant une profondeur P2 égale à 60 mm. Dans cet exemple, les premières et deuxièmes parties de rainure étroite ont une même longueur.

Dans cet exemple, il est formé sur chaque partie intermédiaire 4 une alternance de rainures étroites 411 d'une première profondeur P11 égale à la profondeur P1 des premières parties 611 de rainure étroite de la partie centrale et de rainures étroites 412 d'une deuxième profondeur P22 égale à la profondeur P2 des deuxièmes parties 612 de rainure 61 de la partie centrale 6.

Sur la figure 2 il est montré une coupe dans un plan de coupe dont la trace est indiquée par la ligne II-II sur la figure 1.

Dans cette variante, on combine la présence de rainures étroites de différentes profondeurs avec la présence de deux matériaux M1, M2 superposés dans l'épaisseur de la bande de roulement. Un premier matériau M1 choisi pour avoir de bonnes performances en usure est positionné radialement à l'extérieur de façon à venir en contact avec le sol lorsque la bande de roulement est neuve ; ce premier matériau s'étend jusqu'à une profondeur égale à la profondeur P2 des deuxièmes parties 612 de rainures étroites de la partie centrale. Radialement à l'intérieur de ce premier matériau M1 on place un deuxième matériau M2 choisi pour avoir une bonne résistance aux agressions.

. Dans cette variante préférentielle, les parties de rainures étroites de moindre profondeur P2, P22 disparaissent lorsque le premier matériau est totalement usé.

Comme cela est visible sur la figure 3 montrant la même bande de roulement après cette usure partielle correspondant à la disparition des parties de rainure de moindre profondeur P2 le taux de creux surfacique est diminué comparativement au même taux à neuf. Dans cette configuration, où il ne reste que les rainures étroites initialement les plus profondes 611, 411, le pneu peut être placé sur un essieu arrière d'un véhicule, la diminution du nombre de rainures étroites dans les parties intermédiaires et dans la partie centrale désensibilise la bande de roulement aux agressions sous couple moteur causées par des corps étrangers présents sur le sol et sur lesquels roule le pneu. En outre, la diminution du volume de matière de la bande de roulement réduit sensiblement le niveau thermique en fonctionnement.

Dans une variante non représentée ici, les rainures étroites circonférentielles 2, 3 délimitant les parties intermédiaires et la partie centrale peuvent être omises dès l'état neuf ou encore avoir des profondeurs inférieures à la profondeur des rainures des régions de bord afin de disparaitre après une usure partielle prédéterminée.

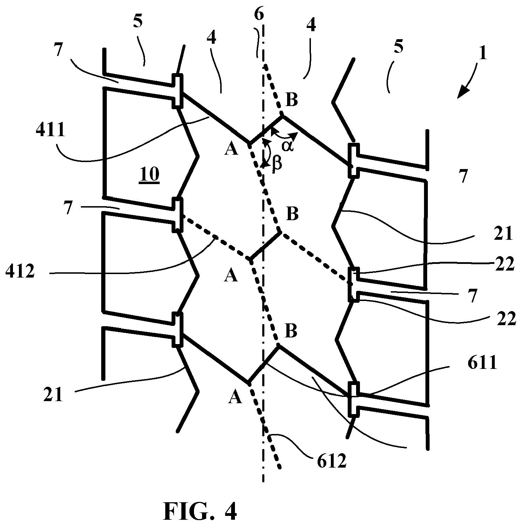

Dans une autre variante de l'invention telle que montrée avec la figure 4, on cherche à ce que les angles des éléments de matière délimités par les rainures étroites soient au moins égaux à 90° sinon assez proches de 90 afin d'éviter des zones fragiles à neuf.

Sur la figure 4 on voit une vue partielle de la surface de roulement 10 à neuf d'une bande de roulement 1 selon une deuxième variante de l'invention.

Selon cette variante d'une bande de roulement d'un pneu destiné à équiper dans un premier temps l'essieu avant d'un véhicule pour usage hors la route, on distingue des régions de bord 5 délimitant axialement la bande de roulement, chaque région de bord 5 étant bordée par une rainure circonférentielle étroite 21 prenant naissance sur des encoches larges 22 elles-mêmes ouvertes sur des rainures obliques 7. Les rainures obliques 7 sont décalées circonférentiellement d'un bord par rapport à l'autre.

Une région centrale 6 centrée sur le plan médian équatorial comprend une rainure étroite 61 comprenant deux parties : une première partie 611 de profondeur P1 et une deuxième partie 612 de profondeur P2, ces parties étant connectées entre elles par des régions de jonctions A et B. La profondeur P1 est plus grande que la profondeur P2.

En outre, la longueur S1 de la partie de rainure 611 est plus petite que la longueur S2 de la partie de rainure 612 tout en conservant une longueur entre deux régions de connexion AA ou BB égale au pas moyen des rainures transversales des bords. Grâce à cela, il est possible d'avoir des angles alpha (**α)** et beta (**β)** qui sont proches ou supérieur à 90° pour les pointes des éléments de matière délimités par les rainures étroites 411, 412, 611, 612. L'angle alpha (**α**) correspond à l'angle entre une première partie de rainure 611 de la région centrale 6 et une rainure 411 ou 412 d'une région intermédiaire 4. L'angle beta (**β**) correspond à l'angle entre une première partie de rainure 611 de la région centrale 6 et une deuxième partie 612 de la même région centrale 6.

Grâce à cette disposition dans la partie centrale, on peut également accentuer l'effet dans la première partie d'usage de la bande de roulement tout en limitant les longueurs de rainures étroites après usure partielle.

En outre dans cette variante, on constate que les taux de creux volumique sont très différents entre les régions de bord et les régions intermédiaires et la région centrale. Sur les régions de bord on a un taux de creux volumique à neuf égal à 20% tandis que sur le reste de la bande de roulement (régions intermédiaires et centrale) le taux de creux volumique est égal à 6%.

L'invention qui a été ici décrite ne saurait être limitée à ces deux exemples et diverses modifications peuvent y être apportées sans sortir du cadre défini par les revendications. Notamment les blocs peuvent être limités par des rainures étroites ayant des géométries curvilignes.

## Revendications

1. Bande de roulement (1) pour pneu destiné à l'équipement d'un véhicule hors la route, cette bande de roulement ayant une surface de roulement (10) destinée à venir en contact avec un sol lors du roulage du pneu, cette bande de roulement ayant une largeur totale (W) et une épaisseur totale de matière à user au moins égale à 60 mm, cette bande de roulement étant délimitée axialement par des régions de bord (5), chaque région de bord (5) ayant une largeur comprise entre 15% et 35% de la largeur totale W de la bande de roulement et comprenant une pluralité de rainures transversales ou obliques (7) de profondeur P, ces rainures (7) des régions de bord (5) étant disposées dans la direction circonférentielle selon un pas moyen (D), cette bande de roulement (1) comprenant en outre une région centrale (6) centrée sur le plan médian équatorial (XX') sur laquelle est formée une rainure étroite (61) occupant toute la largeur de cette région centrale (6), cette rainure étroite (61), à l'état neuf de ladite bande de roulement (1), étant composée d'une alternance de premières parties de rainure étroite (611) et de deuxièmes parties de rainure étroite (612), ces premières parties de rainure étroite et ces deuxièmes parties de rainure étroite étant connectées entre elles par des régions de jonction (A, B) de ladite rainure étroite (61), la distance circonférentielle entre deux mêmes régions de jonction axialement à l'intérieur desquelles se trouvent une première partie de rainure (611) et une deuxième partie de rainure (612) étant égale au pas moyen (D) des rainures (7) des régions de bord (5), cette bande de roulement (1) comprenant entre chaque région de bord (5) et la région centrale (6) une région intermédiaire (4) sur laquelle est formée une pluralité de rainures étroites obliques ou transversales (411, 412), c'est à dire dont l'orientation moyenne fait un angle au plus égal à 60 degrés avec la direction axiale, chacune de ces rainures étroites prenant naissance en une région de jonction (A, B) de la rainure étroite (61) de la région centrale (6) pour rejoindre une rainure transversale ou oblique (7) formée dans l'une des régions de bord (5), cette bande à l'état neuf étant **caractérisée en ce que**:
- la rainure étroite (61) de la région centrale (6) est constituée de premières parties de rainure étroite (611) ayant une profondeur P1 et de deuxièmes parties de rainure étroite (612) ayant une profondeur P2, la profondeur P1 étant plus grande que la profondeur P2, ces profondeurs P1 et P2 étant inférieures à la profondeur P des rainures des régions de bord (5) et **en ce que**
- les rainures étroites (411, 412) d'une même région intermédiaire (4) comprennent dans la direction circonférentielle une alternance de rainures étroites (411) d'une première profondeur P11 et de rainures étroites (412) d'une deuxième profondeur P22, ces profondeurs P11 et P22 étant inférieures à la profondeur P des rainures (7) des régions de bord (5).

2. Bande de roulement selon la revendication 1 **caractérisée en ce que** la rainure étroite (61) de la région centrale (6) comprend des premières parties (611) d'une première longueur (S1) et de profondeur P1 et des deuxièmes parties (612) d'une deuxième longueur (S2) et de profondeur P2 inférieure à la profondeur P1, cette deuxième longueur S2 étant plus grande que la première longueur S1.

3. Bande de roulement selon la revendication 1 ou la revendication 2 **caractérisée en ce que** chaque région de bord (5) est séparée de la région intermédiaire (4) qui lui est directement contiguë par une rainure étroite (2) d'orientation générale circonférentielle.

4. Bande de roulement selon l'une des revendications 1 à 3 **caractérisée en ce qu'**une rainure étroite d'orientation générale circonférentielle (3) est formée entre chaque région intermédiaire (4) et la région centrale (6).

5. Bande de roulement selon l'une des revendications 1 à 4 **caractérisée en ce que** sur chaque région intermédiaire (4) les rainures étroites (411, 412) font un angle moyen au plus égal à 45 degrés avec la direction axiale (YY').

6. Bande de roulement selon l'une des revendications 1 à 5 **caractérisée en ce que**, d'une part, l'écart entre les profondeurs à neuf P1 et P2 des premières parties (611) et des deuxièmes parties (612) de rainure étroite (61) de la région centrale (6) et, d'autre part, l'écart entre les profondeurs à neuf P11 et P12 respectivement des rainures étroites (411) d'une première profondeur P11 et des rainures étroites (412) d'une deuxième profondeur P12 d'une région intermédiaire (4) sont au moins égales à 15% et au plus égales à 70% de la profondeur P des rainures (7) formées sur les régions de bord (5) de la bande de roulement (1).

7. Bande de roulement selon l'une des revendications 1 à 6 **caractérisée en ce qu'**elle comprend un premier matériau (M1) et un deuxième matériau (M2) de manière à ce que dans un premier temps ce soit le premier matériau (M1) qui soit en contact avec le sol et qu'ensuite ce soit le deuxième matériau (M2) qui vienne en contact avec le sol, le premier matériau (M1) étant choisi pour être un matériau ayant de bonnes performances en usure tandis que le deuxième matériau (M2) est choisi pour avoir une meilleure résistance aux agressions.

## Patentansprüche

1. Laufstreifen (1) für einen Reifen, der für die Ausrüstung eines Geländefahrzeugs bestimmt ist, wobei dieser Laufstreifen eine Lauffläche (10) aufweist, die dazu bestimmt ist, beim Rollen des Reifens mit einem Boden in Kontakt zu kommen, wobei dieser Laufstreifen eine Gesamtbreite (W) und eine Gesamtdicke von abzunutzendem Material, die wenigstens 60 mm beträgt, aufweist, wobei dieser Laufstreifen axial von Randbereichen (5) begrenzt wird, wobei jeder Randbereich (5) eine Breite aufweist, die zwischen 15 % und 35 % der Gesamtbreite W des Laufstreifens beträgt, und mehrere quer oder schräg verlaufende Rillen (7) mit einer Tiefe P umfasst, wobei diese Rillen (7) der Randbereiche (5) in der Umfangsrichtung mit einer mittleren Schrittweite (D) angeordnet sind, wobei dieser Laufstreifen (1) außerdem einen auf der äquatorialen Mittelebene (XX') zentrierten zentralen Bereich (6) umfasst, in dem eine schmale Rille (61) ausgebildet ist, welche die gesamte Breite dieses zentralen Bereichs (6) einnimmt, wobei diese schmale Rille (61) im neuen Zustand des Laufstreifens (1) aus einer wechselnden Folge von ersten Teilen einer schmalen Rille (611) und zweiten Teilen einer schmalen Rille (612) besteht, wobei diese ersten Teile einer schmalen Rille und diese zweiten Teile einer schmalen Rille durch Übergangsbereiche (A, B) der schmalen Rille (61) miteinander verbunden sind, wobei der Umfangsabstand zwischen zwei Übergangsbereichen, axial innerhalb derer sich ein erster Rillenteil (611) und ein zweiter Rillenteil (612) befinden, gleich der mittleren Schrittweite (D) der Rillen (7) der Randbereiche (5) ist, wobei dieser Laufstreifen (1) zwischen jedem Randbereich (5) und dem zentralen Bereich (6) einen Zwischenbereich (4) aufweist, in dem mehrere schmale Rillen (411, 412) ausgebildet sind, die schräg oder quer verlaufen, das heißt deren mittlere Ausrichtung einen Winkel, der höchstens 60 Grad beträgt, mit der axialen Richtung bildet, wobei jede dieser schmalen Rillen in einem Übergangsbereich (A, B) der schmalen Rille (61) des zentralen Bereichs (6) beginnt, um eine quer oder schräg verlaufende Rille (7) zu erreichen, die in einem der Randbereiche (5) ausgebildet ist, wobei dieser Streifen im neuen Zustand **dadurch gekennzeichnet ist, dass**:
die schmale Rille (61) des zentralen Bereichs (6) aus ersten Teilen einer schmalen Rille (611), die eine Tiefe P1 aufweisen, und zweiten Teilen einer schmalen Rille (612), die eine Tiefe P2 aufweisen, besteht, wobei die Tiefe P1 größer als die Tiefe P2 ist, wobei diese Tiefen P1 und P2 kleiner als die Tiefe P der Rillen der Randbereiche (5) sind, und dadurch, dass
die schmalen Rillen (411, 412) ein und desselben Zwischenbereichs (4) in der Umfangsrichtung eine wechselnde Folge von schmalen Rillen (411) mit einer ersten Tiefe P11 und schmalen Rillen (412) mit einer zweiten Tiefe P22 umfassen, wobei diese Tiefen P11 und P22 kleiner als die Tiefe P der Rillen (7) der Randbereiche (5) sind.

2. Laufstreifen nach Anspruch 1, **dadurch gekennzeichnet, dass** die schmale Rille (61) des zentralen Bereichs (6) erste Teile (611) mit einer ersten Länge (S1) und einer Tiefe P1 und zweite Teile (612) mit einer zweiten Länge (S2) und einer Tiefe P2, die kleiner als die Tiefe P1 ist, umfasst, wobei diese zweite Länge S2 größer als die erste Länge S1 ist.

3. Laufstreifen nach Anspruch 1 oder Anspruch 2, **dadurch gekennzeichnet, dass** jeder Randbereich (5) von dem Zwischenbereich (4), der direkt an ihn angrenzt, durch eine schmale Rille (2) getrennt ist, die im Wesentlichen in Umfangsrichtung ausgerichtet ist.

4. Laufstreifen nach einem der Ansprüche 1 bis 3, **dadurch gekennzeichnet, dass** eine schmale Rille (3), die im Wesentlichen in Umfangsrichtung ausgerichtet ist, zwischen jedem Zwischenbereich (4) und dem zentralen Bereich (6) ausgebildet ist.

5. Laufstreifen nach einem der Ansprüche 1 bis 4, **dadurch gekennzeichnet, dass** in jedem Zwischenbereich (4) die schmalen Rillen (411, 412) einen mittleren Winkel von höchstens 45 Grad mit der axialen Richtung (YY') bilden.

6. Laufstreifen nach einem der Ansprüche 1 bis 5, **dadurch gekennzeichnet, dass** einerseits der Unterschied zwischen den Tiefen im neuen Zustand, P1 und P2, der ersten Teile (611) und der zweiten Teile (612) der schmalen Rille (61) des zentralen Bereichs (6) und andererseits der Unterschied zwischen den Tiefen im neuen Zustand, P11 und P12, der schmalen Rillen (411) mit einer ersten Tiefe P11 bzw. der schmalen Rillen (412) mit einer zweiten Tiefe P12 eines Zwischenbereichs (4) mindestens 15 % und höchstens 70 % der Tiefe P der Rillen (7), die in den Randbereichen (5) des Laufstreifens (1) ausgebildet sind, betragen.

7. Laufstreifen nach einem der Ansprüche 1 bis 6, **dadurch gekennzeichnet, dass** er ein erstes Material (M1) und ein zweites Material (M2) umfasst, derart, dass in einem ersten Zeitraum das erste Material (M1) dasjenige ist, welches sich mit dem Boden in Kontakt befindet, und dass anschließend das zweite Material (M2) dasjenige ist, welches mit dem Boden in Kontakt kommt, wobei das erste Material (M1) so gewählt ist, dass es ein Material mit guten Verschleißeigenschaften ist, während das zweite Material (M2) so gewählt ist, dass es eine bessere Verletzungsresistenz aufweist.

## Claims

1. Tread (1) of a tyre intended to be fitted to an off-road vehicle, this tread having a tread surface (10) which is intended to come into contact with the ground when the tyre is running, this tread having a total width (W) and a total thickness of wearable material at least equal to 60 mm, this tread being delimited axially by shoulder regions (5), each shoulder region (5) having a width comprised between 15% and 35% of the total width W of the tread and comprising a plurality of transverse or oblique grooves (7) of depth P, these shoulder-region (5) grooves (7) being arranged in the circumferential direction with a mean spacing (D), this tread (1) further comprising a central region (6) centred on the equatorial mid-plane (XX') and in which region there is formed a narrow groove (61) that occupies the entire width of this central region (6), this narrow groove (61), when said tread (1) is new, being made up of an alternation of first narrow-groove parts (611) and of second narrow-groove parts (612), these first and second narrow-groove parts being connected to each other by joining regions (A, B) of said narrow groove (61), the circumferential distance between two same joining regions axially on the inside of which a first groove part (611) and a second groove part (612) can be found being equal to the mean spacing (D) of the shoulder-region (5) grooves (7), this tread (1) comprising, between each shoulder region (5) and the central region (6), an intermediate region (4) in which there are formed a plurality of oblique or transverse narrow grooves (411, 412), that is to say grooves the mean orientation of which makes an angle at most equal to 60 degrees with the axial direction, each of these narrow grooves beginning in a joining region (A, B) of the narrow groove (61) of the central region (6) to reconnect into a transverse or oblique groove (7) formed in one of the shoulder regions (5), this tread when new being **characterized in that:**
- the narrow groove (61) of the central region (6) is made up of first narrow-groove parts (611) of depth P1 and of second narrow-groove parts (612) of depth P2, the depth P1 being greater than the depth P2, these depths P1 and P2 being less than the depth P of the grooves in the shoulder regions (5), and **in that**
- the narrow grooves (411, 412) of one same intermediate region (4) comprise, in the circumferential direction, an alternation of narrow grooves (411) of a first depth P11 and of narrow grooves (412) of a second depth P22, these depths P11 and P22 being less than the depth P of the grooves (7) in the shoulder regions (5).

2. Tread according to Claim 1, **characterized in that** the narrow groove (61) of the central region (6) comprises first parts (611) of a first length (S1) and of depth P1 and second parts (612) of a second length (S2) and of depth P2 less than the depth P1, this second length S2 being greater than the first length S1.

3. Tread according to Claim 1 or Claim 2, **characterized in that** each shoulder region (5) is separated from the intermediate region (4) directly contiguous with it by a narrow groove (2) of circumferential overall orientation.

4. Tread according to one of Claims 1 to 3, **characterized in that** a narrow groove of circumferential overall orientation (3) is formed between each intermediate region (4) and the central region (6).

5. Tread according to one of Claims 1 to 4, **characterized in that**, in each intermediate region (4), the narrow grooves (411, 412) make a mean angle at most equal to 45 degrees with the axial direction (YY').

6. Tread according to one of Claims 1 to 5, **characterized in that** on the one hand the difference between the as-new depths P1 and P2 of the first parts (611) and of the second parts (612) of narrow groove (61) in the central region (6) and, on the other hand, the difference between the as-new depths P11 and P12 respectively of the narrow grooves (411) of a first depth P11 and of the narrow grooves (412) of a second depth P12 of an intermediate region (4) are at least equal to 15% and at most equal to 70% of the depth P of the grooves (7) formed on the shoulder regions (5) of the tread (1).

7. Tread according to one of Claims 1 to 6, **characterized in that** it comprises a first material (M1) and a second material (M2) so that initially it is the first material (M1) that is in contact with the ground and subsequently it is the second material (M2) that comes into contact with the ground, the first material (M1) being chosen for being a material that has good wearing performance, whereas the second material (M2) is chosen for having better resistance to attack.
